# EUROPÄISCHE PATENTSCHRIFT

(11) **EP 2 065 990 B1**
(45) Veröffentlichungstag und Bekanntmachung des Hinweises auf die Patenterteilung: **16.10.2013**
(21) Anmeldenummer: 08018630.7
(22) Anmeldetag: 24.10.2008
(51) Int. Cl.: H02B 1/30

(54) **Schaltschrank**
Electrical cabinet
Armoire électrique

(30) Priorität: 27.11.2007 DE 102007057381
(43) Veröffentlichungstag der Anmeldung: 03.06.2009
(73) Patentinhaber: RITTAL GmbH, 35745 Herborn (DE)
(72) Erfinder: Weber, Markus, 35708 Haiger (DE); Klassen, Samuel, 35708 Haiger (DE); Holighaus, Heiko, 35713 Eschenburg (DE)
(74) Vertreter: Tönhardt, Marion

(56) Entgegenhaltungen:
- US-A- 6 062 665
- US-B1- 6 365 826

## Beschreibung

Die Erfindung betrifft einen Schaltschrank mit einem Schaltschrankgehäuse, welches an seiner Oberseite durch ein oberes Abdeckblech begrenzt wird und an seiner Vorderseite mindestens eine Schaltschranktür aufweist. An der Oberseite des Schaltschrankgehäuses ist eine Mehrzahl von Transportösen angebracht, welche durch ein lösbar befestigbares Dach abdeckbar sind.

Aus dem Rittal-Handbuch 32, Seite 879, ist ein so genanntes CS Basicgehäuse bekannt, welches im Wesentlichen aus einem Schaltschrankgehäuse mit mindestens einer Türe und einem zusätzlichen aufgesetzten Wetterschutz-Dach besteht. Derartige Schaltschränke sind insbesondere auch für den Außen-Einsatz konzipiert und sollen zum einen den Eintritt von Regenwasser in das Innere des Gehäuses und zum anderen einen gewissen Kühleffekt bei direkter Sonnenbestrahlung ermöglichen.

Bei dem bekannten Schaltschrank besteht das Wetterschutz-Dach im Wesentlichen aus einem flächigen Dachblech, welches mit Hilfe eines separaten Winkelprofils an dem oberen Rahmengestell des Schaltschrankes bzw. an dessen oberen Abdeckblech angebracht ist. Das Winkelprofil ist am hinteren, dem Benutzer abgewandten Teil des Schaltschrankgehäuses mittels Schraubverbindungen befestigt. Seitlich schließt das Wetterschutz-Dach durch ebenfalls am Schaltschrankgehäuse befestigte, separate Seitenteilen ab, die wiederum durch Eckstücke mit dem Winkelprofil und dem Abdeckblech verbunden sind. An dem dem Benutzer zugewandten Teil des Schaltschrankgehäuses ist ein durch Eckstücke mit den beiden Seitenteilen verbundenes, separates Dach-Vorderteil, welches das Wetterschutz-Dach nach vorne hin begrenzt, angeschraubt.

Der Montage- und Teileaufwand ist bei dem bekannten Schaltschrank nicht unerheblich. Dabei ist es insbesondere sehr aufwendig, das Wetterschutz-Dach für einen Transport abzunehmen und nach einen Transport wieder aufzusetzen und zu befestigen. Denn für einen Transport sind an der oberen Abdeckung des Schaltschanks an dessen oberen Rahmenprofil in den Eckbereichen vier Ringschrauben in entsprechende Bohrungen eingeführt und verschraubt. Diese Ringschrauben dienen als so genannte Transport- oder Kranösen, in welche beispielsweise mittels Karabinern vier Transportseile angehängt werden können, die wiederum mittig zusammengeführt und von einem Kran aufgenommen werden können. Die Kranösen sind bei aufgesetztem Wetterschutz-Dach durch dieses abgedeckt, so dass das Wetterschutz-Dach gleichzeitig als Vandalen- oder Diebstahlschutz dient. Bei dem bekannten Schaltschrank sind die Kranösen als sehr schwere, separat einzuschraubende Bauteile ausgebildet, deren Montage am Schaltschrankgehäuse aufwendig ist und eine erhebliches Mehrgewicht bedeuten.

Ein solcher Schaltschrank ist aus der Druckschrift US 6062665 bekannt.

Es ist Aufgabe der Erfindung, einen Schaltschrank mit einem aufgesetzten Dach anzugeben, welches auf einfache Weise und mit einem geringen Teileaufwand lösbar am Schaltschrankgehäuse montierbar ist.

Darüber hinaus soll der erfindungsgemäße Schaltschrank im Bereich des aufgesetzten Daches eine Transporteinrichtung aufweisen, die Gewicht und Material sparend ausgeführt ist und dennoch im Wesentlichen dieselbe Traglast wie herkömmliche Ringschrauben erlaubt.

Diese Aufgabe der Erfindung wird durch einen Schaltschrank mit den Merkmalen des Anspruchs 1 gelöst. Die Unteransprüche betreffen vorteilhafte Weiterbildungen des erfindungsgemäßen Schaltschranks.

Demgemäß sind die Transportösen durch Winkelelemente gebildet. Die Winkelelemente weisen jeweils einen von dem oberen Abdeckblech hervorstehenden, mit einer Durchgangsbohrung versehenen Schenkel und einen dazu im Winkel stehenden Befestigungsschenkel auf. Die Befestigungsschenkel mindestens eines Teils der Winkelelemente weisen jeweils einen Befestigungsbereich auf, mit welchem die Winkelelemente an der Oberseite des Schaltschrankgehäuses angebracht ist. Weiterhin weisen die Winkelelemente jeweils einen Haltebereich auf, mit welchem die Winkelelemente ein an dem aufgesetzten Dach angeformtes Randprofil hintergreifen.

Das auf das Schaltschrankgehäuse aufgesetzte Dach lässt sich auf einfache Weise und mit einem geringen Teileaufwand lösbar am Schaltschrankgehäuse montieren. Der Schaltschrank weist im Bereich des aufgesetzten Daches eine Transporteinrichtung auf, die eine Doppelfunktion erfüllt. Zum einen dienen die einschenklig durchbohrten Winkelelemente als Transport- oder Kranösen, zum anderen sichern die Winkelelemente das Dach gegen Abheben. Die Winkelelemente können auf einfache Weise am Schaltschrankgehäuse angeschraubt, vernietet oder mit diesem verschweißt werden Dabei sind die Winkelelemente, die im Wesentlichen aus einem abgekanteten Metallblech vorbestimmter Stärke bestehen können Gewicht und Material sparend ausgeführt. Je nach Montagestellung und Wahl des Materials und der Materialstärke weisen die Winkelemente im Wesentlichen dieselbe Traglast wie herkömmliche Ringschrauben auf.

Der Haltebereich kann gegenüber dem Randprofil federelastisch vorgespannt sein, so dass im montierten Zustand des Daches ein Gegendruck auf das Randprofil wirkt. Dieser Gegendruck sicher das Dach in seiner Montageposition.

Ein Teil der nur als Transporteinrichtung verwendeten Winkelelemente kann auch folgendermaßen aufgebaut sein: Der Schenkel, der von dem oberen Abdeckblech hervorsteht, weist eine Durchgangsbohrung auf. Der Befestigungsschenkel, der zum Schenkel in einem Winkel steht, liegt an dem oberen Abdeckblech des Schaltschrankgehäuses im Wesentlichen ganzflächig an und ist an diesem befestigt. Ein derartiges Winkelelement dient als Transport- oder Kranöse, leistet jedoch keinen Beitrag zur Sicherung des Daches.

Um eine besonders hohe Tragkraft der Transporteinrichtung zu erreichen, können die Schenkel der oder aller verwendeten Winkelelemente im Wesentlichen in Richtung der Diagonalen des oberen Abdeckblechs ausgerichtet sein. Diese diagonale Ausrichtung der Kranösen ermöglicht es, mit geringem Materialeinsatz und dünneren Materialien gleiche Hubbelastungen wie bei der Verwendung von Ringschrauben zu realisieren, denn unabhängig vom Seilwinkel beim Transport wird die Kraft immer auf der Blechebenen eingeleitet. Zudem können die Winkelelemente besonders kleinbauend ausgeführt sein. Die Haltebereiche der Befestigungsschenkel der Winkelelemente, die zur Sicherung des Daches eingesetzt werden, können dabei so ausgelegt sein, dass das am aufgesetzten Dach angeformte Randprofil sicher hintergriffen bzw. gesichert wird.

Das Dach kann ein flächiges Dachblech aufweisen, welches umfangsmäßig über das obere Abdeckblech des Schaltschrankgehäuses, d.h. über dessen Vorder- und Rückseite und die Seitenteile mit einem Randprofil hervorsteht. Das Randprofil weist eine umlaufende, sich in Richtung auf das obere Abdeckblech, d.h. in Richtung des Sockels des Schaltschrankgehäuses ausgerichtete Seitenabkantung aufweist.

Die Seitenabkantung weist wiederum eine dazu in Richtung auf die Mitte des oberen Abdeckblechs des Schaltschrankgehäuses abgekantete Auflage auf. Mit der Auflage liegt das Dach von oben her am Randbereich des oberen Abdeckblechs des Schaltschrankgehäuses auf.

Die Auflage kann Lüftungsschlitze aufweisen, um beispielsweise unter dem Dach aufgrund von Sonneneinstrahlung angestaute warme Luft abzuleiten. Die Lüftungsschlitze können in Bereichen angeordnet sein, die sich zumindest teilweise parallel zur Schaltschranktür, zur Rückwand und zu den Seitenblechen des Schaltschrankgehäuses erstrecken. Dabei kann eine Mehrzahl von Lüftungsschlitzen senkrecht zur Schaltschranktür, zur Rückwand und zu den Seitenblechen des Schaltschrankgehäuses verlaufen.

Gemäß einer Ausführungsform der Erfindung kann die Auflage des am Dach angeformten Randprofils zwischen den Befestigungsschenkeln mindestens zweier Winkelelemente und dem oberen Abdeckblech des Schaltschrankgehäuses festgelegt sein. Dies ermöglicht zumindest eine einseitige Sicherung gegen Abheben des Daches vom Schaltschrankgehäuse.

In vorteilhafter Weise können dabei zumindest zwei der Winkelelemente mit zumindest einem Teil der Haltebereiche der Befestigungsschenkel über die Umfangsbegrenzung des oberen Abdeckblechs des Schaltschrankgehäuses hervorstehen. Mit dem hervorstehenden Teil der Befestigungsschenkel kann dadurch eine einseitige Sicherung geschaffen werden, in die das Dach bei der Montage auf einfache Weise vorzugsweise in einer gegenüber dem oberen Abdeckblech verkippten Stellung eingehängt werden kann.

Um wirkungsvoll zu verhindern, dass das Dach von Unberechtigten gegenüber dem Schaltschrankgehäuse verschoben wird, kann an dem der Schaltschranktür zugewandten Bereich des Randprofils des Daches ein sich vom Dach in Richtung auf den Bodenrahmen des Schaltschranks erstreckender Verriegelungsansatz angeformt sein. Dieser Verriegelungsansatz erstreckt sich bei geschlossener Schaltschranktür in den Abstandsbereich zwischen der Schaltschranktür und dem Schaltschrankgehäuse hinein. Dadurch wird bei geschlossener Schaltschranktür ein Verschieben des Daches gegenüber dem oberen Abdeckblech in Richtung der Schaltschranktür verhindert. Mit diesen einfachen Maßnahmen wird vermieden, dass das Dach durch Schraubverbindungen gesichert werden muss. Somit wird der Montage- und gegebenenfalls auch Demontageaufwand erheblich reduziert und zusätzlich Material eingespart.

Um zusätzlichwirkungsvoll zu verhindern, dass das Dach von Unberechtigten vom Schaltschrankgehäuse abgehoben wird, kann der dem oberen Abdeckblech des Schaltschrankgehäuses zugeordnete Rand der Schaltschranktür in Richtung auf das Schaltschrankgehäuse abgekantet sein. Dabei ist der sich vom Dach in Richtung auf den Bodenrahmen des Schaltschranks erstreckender Verriegelungsansatz an seinem unteren Ende in Richtung auf die Schaltschranktür abgekantet. Falls ein Unberechtigter versuchen sollte, das Dach im vorderen, der Schaltschranktür zugeordneten Bereich abzuheben, werden die beiden sich gegenüberstehenden Abkantungen der geschlossenen Schaltschranktür und des Verriegelungsansatzes aufeinander treffen und ein weiteres Abheben verhindern.

Der Teil der Winkelelemente, die in ihrer Doppelfunktion als Transport- oder Kranöse und als Dachsicherung verwendet werden, kann auch folgendermaßen aufgebaut sein: Der Befestigungsbereich des Befestigungsschenkels des Winkelelements liegt am oberen Abdeckblech des Schaltschrankgehäuses an und ist an diesem befestigt. Der Haltebereich des Befestigungsschenkels ist von dem oberen Abdeckblech des Schaltschrankgehäuses in einem Abstand beabstandet, welcher im Wesentlichen der Höhe der Auflage des Randprofils des Daches entspricht.

Die Auflage des am Dach angeformten Randprofils kann dabei durch Verschieben gegenüber dem oberen Abdeckblech auf einfache Weise in den Abstandsbereich zwischen dem oberen Abdeckblech und dem Haltebereich des Befestigungsschenkels des Winkelelements eingeführt werden. Dies sichert das Dach wirkungsvoll gegen Abheben.

Gemäß einer ersten bevorzugten Ausführungsform der Erfindung können mindestens zwei Winkelelemente eines ersten Typs am oberen Abdeckblech im Bereich der von der Schaltschranktür abgewandten Rückwand angeordnet sein. Zusätzlich sind mindestens zwei Winkelelemente eines zweiten Typs im Bereich der Tür des Schaltschrankgehäuses angeordnet und dort befestigt.

Die Winkelelemente des ersten Typs sind dabei folgendermaßen ausgeführt und positioniert: Die Befestigungsschenkeln liegen mit ihren Befestigungsbereichen am oberen Abdeckblech des Schaltschrankgehäuses an und sind an diesem befestigt. Die Haltebereiche sind vom oberen Abdeckblech des Schaltschrankgehäuses beabstandet und stehen über die Umfangsbegrenzung des oberen Abdeckblechs hervor. Damit kann die Auflage des Randprofils zwischen den Befestigungsschenkeln der zwei Winkelelemente des ersten Typs und dem oberen Abdeckblech des Schaltschrankgehäuses sicher festgelegt werden.

Die Winkelelemente des zweiten Typs weisen dabei Befestigungsschenkel auf, die am oberen Abdeckblech des Schaltschrankgehäuses im Wesentlichen vollflächig anliegen.

Um eine verbreiterte Auflagefläche zwischen dem am Dach angeformten Randprofil und der Oberseite des Schaltschrankgehäuses zu schaffen, kann die Auflage des Randprofils, die im Bereich zwischen den beiden Winkelelementen des ersten Typs ausgebildet ist, mit einem vorstehenden Auflagebereich in Richtung auf die Mitte des oberen Abdeckblechs des Schaltschrankgehäuses hervorstehen.

Für eine einfache Montage kann das Dach in einer Position auf das obere Abdeckblech des Schaltschrankgehäuses aufgesetzt werden, in welcher das Dach um ein gewisses Stück in Richtung der Schaltschrankrückwand verschoben ist. In dieser nach hinten verschobenen Position ist die im Bereich der von der Schaltschranktür abgewandten Rückwand angeordnete Auflage des Randprofils des Daches in von der Rückwand wegweisenden Richtung angeordnet. Dabei kommt die Auflage des Randprofils nicht mit den Haltebereichen der Befestigungsschenkel der Winkelelemente des ersten Typs in Eingriff. Wenn das Dach in Richtung auf die Schaltschranktür hin, d.h. nach vorne verschoben wird, kommt die Auflage des Randprofils mit den Haltebereichen der Befestigungsschenkel der Winkelelemente des ersten Typs in Eingriff, so dass eine Sicherung des Daches gegen Abheben geschaffen ist.

Gemäß einer zweiten bevorzugten Ausführungsform können mindestens zwei Winkelelemente am oberen Abdeckblech im Bereich der von der Schaltschranktür abgewandten Rückwand und mindestens zwei weitere Winkelelemente im Bereich der Tür des Schaltschrankgehäuses angeordnet sein. Die Winkelelemente sind dabei alle vom selben Typ, der dem ersten Typ der ersten bevorzugten Ausführungsform entsprechen kann. Die Winkelelemente sind dabei folgendermaßen ausgeführt: Die Befestigungsschenkel liegen mit ihren Befestigungsbereichen am oberen Abdeckblech des Schaltschrankgehäuses an und sind an diesem befestigt. Die Haltebereiche sind vom oberen Abdeckblech des Schaltschrankgehäuses beabstandet, wobei die Auflage des Randprofils zwischen den Befestigungsschenkeln der Winkelelemente und dem oberen Abdeckblech des Schaltschrankgehäuses festlegbar ist.

Um eine einfache Montage und gegebenenfalls auch eine einfache Demontage des Daches zu ermöglichen, kann die Auflage des Randprofils Ausnehmungen aufweisen, die in Richtung der Rückwand des Schaltschrankgehäuses benachbart zu den Winkelelementen und korrespondierend zu den Haltebereichen der Befestigungsschenkel der Winkelelemente ausgeformt sind.

Für eine einfache Montage kann das Dach in einer Position auf das obere Abdeckblech des Schaltschrankgehäuses aufgesetzt werden, in welcher das Dach um ein gewisses Stück in Richtung der Schaltschranktür verschoben ist. In dieser Position sind die Ausnehmungen in der Auflage des Randprofils mit den Haltebereichen der Befestigungsschenkel der Winkelelemente in Deckung. Dabei stehen die Auflage des Randprofils mit den Haltebereichen der Befestigungsschenkel der Winkelelemente nicht in Eingriff. Wenn das Dach in Richtung auf die Rückwand des Schaltschrankgehäuses hin verschoben wird, kommt die Auflage des Randprofils mit den Haltebereichen der Befestigungsschenkel in Eingriff, so dass eine Sicherung des Daches gegen Abheben geschaffen ist.

Der sich vom Dach in Richtung auf den Bodenrahmen des Schaltschrankgehäuses erstreckende Verriegelungsansatz kann bei Verschiebung des Daches in Richtung der Rückwand des Schaltschrankgehäuses am Schaltschrankgehäuse anschlagen. Damit wird zum einen ein Verschieben des Daches in Richtung der Schaltschrankrückwand begrenzt, zum anderen wird bei geschlossener Tür verhindert, dass das Dach in Richtung auf die Schaltschranktür verschoben werden kann.

Nachfolgend wird die Erfindung anhand von bevorzugten Ausführungsformen unter Bezugnahme auf die beigefügten Zeichnungen näher erläutert.

Es zeigen:
- Figur 1: in schematischer Darstellung und in perspektivischer Ansicht einen Schaltschrank mit einem Schaltschrankgehäuse, an welchem eine Schaltschranktür, ein Sockel und ein Dach angebracht angebracht werden;
- Figur 2: in schematischer Darstellung und in Draufsicht einen Schaltschrank gemäß einer ersten bevorzugten Ausführungsform, bei der ein Dach auf das obere horizontale Abdeckblech des Schaltschrankgehäuses aufgesetzt und durch Winkelelemente gesichert ist, wobei das Dachblech in der Darstellung ausgelassen ist, um den Blick auf das am Dach angeformte Randprofil und die Anordnung zweier unterschiedlicher Typen von Winkelelementen freizugeben;
- Figur 3: in schematischer Darstellung und in teilweise geschnittener Seitenansicht ein in der Figur 2 dargestelltes Winkelelement des ersten Typs;
- Figur 4: in schematischer Darstellung und in teilweise geschnittener Seitenansicht ein in der Figur 2 dargestelltes Winkelelement des zweiten Typs;
- Figur 5: in schematischer Darstellung und geschnittener Seitenansicht den Dachbereich des in der Figur 2 dargestellten Schaltschrankes;
- Figur 6: in schematischer Darstellung und geschnittener Seitenansicht den in der Figur 5 gekennzeichneten Teil IV in vergrößerter Darstellung; und
- Figur 7: in schematischer Darstellung und in Draufsicht einen Schaltschrank gemäß einer zweiten bevorzugten Ausführungsform, bei der ein Dach auf das obere horizontale Abdeckblech des Schaltschrankgehäuses aufgesetzt und durch Winkelelemente gesichert ist, wobei das Dachblech in der Darstellung ausgelassen ist, um den Blick auf das am Dach angeformte Randprofil und die Anordnung von vier Winkelelementen des ersten Typs freizugeben.

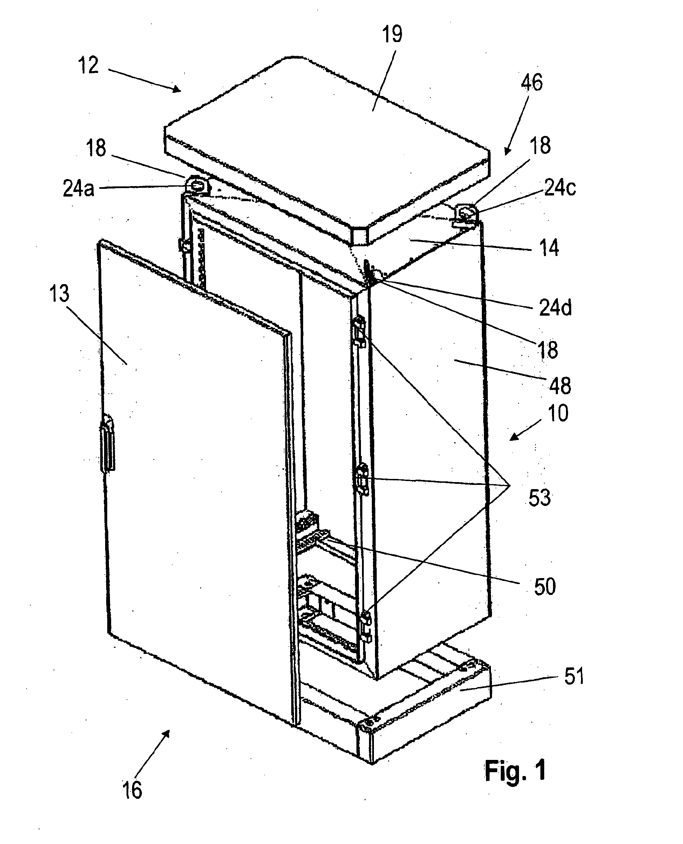

Die Figur 1 zeigt in schematischer Darstellung und in perspektivischer Ansicht einen Schaltschrank mit einem Schaltschrankgehäuse 10. Das Schaltschrankgehäuse 1.0 ist an seiner Oberseite 12 durch ein oberes, sich horizontal zum (nicht dargestellten) Boden erstreckendes Abdeckblech 14 begrenzt. An der Vorderseite 16 weist der Schaltschrank eine Schaltschranktür 13 auf, die an am Schaltschrankgehäuse angebrachten Scharnieren 53 angelenkt werden. Am unteren Ende wird das Schaltschrankgehäuse 10 mit seinem nach unten offenen Bodenrahmen 50 auf einen Sockel 51 aufgesetzt, mit welchem der Schaltschrank auf dem Boden aufgestellt ist.

An der Oberseite 12 des Schaltschrankgehäuses 10 sind vier Transportösen 18 angebracht, die durch Winkelelemente gebildet sind, von denen in der Figur 1 nur die Winkelelemente mit den Bezugszeichen 24a, 24c und 24d dargestellt sind. An der Oberseite 12 des Schaltschrankgehäuses 10 wird ein Wetterschutz-Dach 19 auf das obere horizontalen Abdeckblech 14 aufgesetzt, das mit dem Schaltschrankgehäuses 10 lösbar verbunden wird. Das Dach 19 deckt im (in Figur 1 nicht gezeigten) montierten Zustand die Transportösen 18 ab.

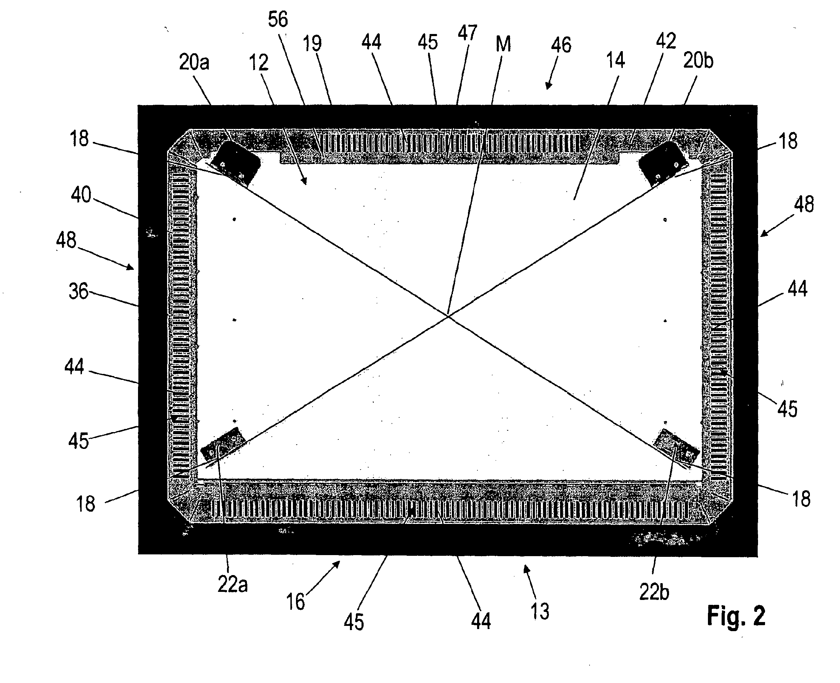

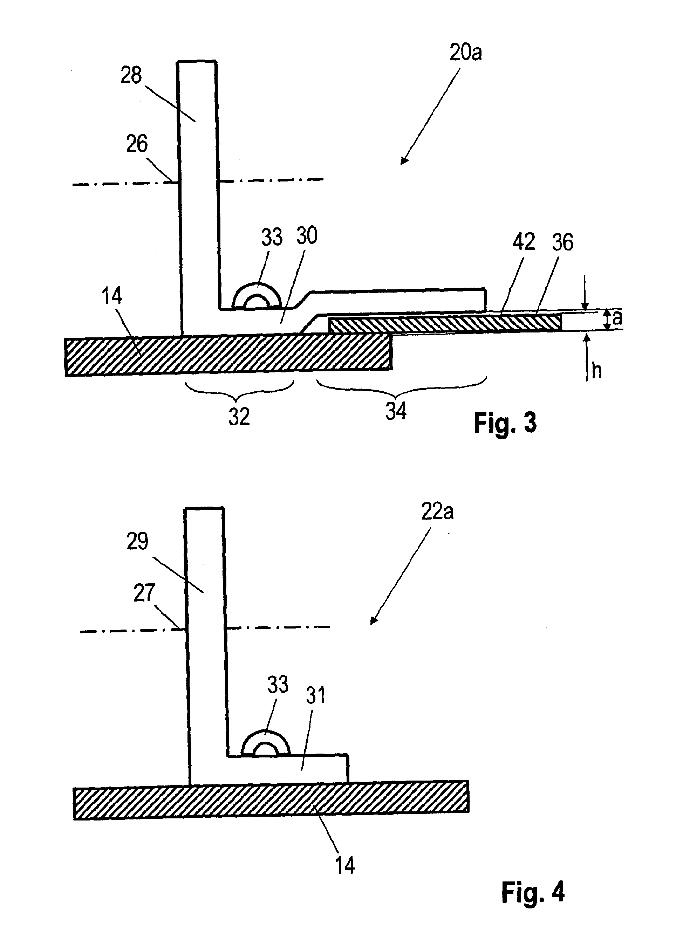

Die Figur 2 zeigt in schematischer Darstellung und in Draufsicht einen Schaltschrank gemäß einer ersten bevorzugten Ausführungsform, bei der das Dach 19 auf das obere horizontale Abdeckblech 14 des Schaltschrankgehäuses 10 aufgesetzt und durch Winkelelemente 20a, 20b eines ersten Typs (der nachfolgend anhand der Figur 3 näher beschrieben wird) gesichert ist. Die Winkelelement 22a und 22b eines vom ersten Typ unterschiedlichen zweiten Typs (der nachfolgend anhand der Figur 4 näher beschrieben wird) dienen nicht der Sicherung des Daches 19, sondern sind ausschließlich als Transport- bzw. Kranösen ausgebildet. Das Dachblech des Daches 19 ist in der Darstellung der Figur 2 ausgelassen, um den Blick auf das am Dach 19 angeformte Randprofil 36 und die Anordnung der Winkelelemente 20a, 20b des ersten Typs und der Winkelelemente 22a, 22b des zweiten Typs freizugeben.

Zwei Winkelelemente 20a und 20b des ersten Typs sind am oberen horizontalen Abdeckblech 14 im Bereich der von der Schaltschranktür 13 abgewandten Rückwand 46 in den zugeordneten Eckbereichen des Abdeckblechs 14 angeordnet.

Zwei Winkelelemente 22a und 22b des zweiten Typs sind am oberen horizontalen Abdeckblech 14 im Bereich der Schaltschranktür 13 des Schaltschrankgehäuses 10 in den zugeordneten Eckbereichen des Abdeckblechs 14 angeordnet und dort befestigt.

Die Figur 3 zeigt in schematischer Darstellung und in teilweise geschnittener Seitenansicht ein in der Figur 2 dargestelltes Winkelelement 20a des ersten Typs. Die in der Figur 2 gezeigten Winkelelemente 20a und 20b sind gleich ausgebildet. Nachfolgend wird anhand der Figur 3 nur das Winkelelemente 20a beschrieben. Von dem oberen horizontalen Abdeckblech 14 steht senkrecht ein Schenkel 28 hervor. Der Schenkel 28 ist mit einer senkrecht dazu angebrachten Durchgangsbohrung 26 zum Eingreifen von Karabinern versehen.

Parallel zum oberen horizontalen Abdeckblech 14 erstreckt sich ein Befestigungsschenkel 30, der sich im rechten Winkel an den Schenkel 28 anschließt. Der Befestigungsschenkel 30 weist angrenzend an den Schenkel 28 einen Befestigungsbereich 32 auf, mit welchem das Winkelelement 20a am oberen horizontalen Abdeckblech 14 des Schaltschrankgehäuses 10 angebracht ist. Zu diesem Zweck ist bei der in der Figur 3 gezeigten Ausführungsform eine Nietverbindung 33 angedeutet. Alternativ könnte auch eine (nicht gezeigte) Schraub- oder Schweißverbindung vorgesehen sein. In Richtung des freien Endes des Befestigungsschenkels 30 weist dieser angrenzend an den Befestigungsbereich 32 einen Haltebereich 34 auf, mit welchem der Befestigungsschenkels 30 ein am Dach 19 angeformtes Randprofil 36 hintergreift.

Der Haltebereich 34 kann in einer (nicht gezeigten) Ausführungsform gegenüber dem Randprofil 36 federelastisch vorgespannt sein, so dass im montierten Zustand des Daches ein Gegendruck auf das Randprofil 36 wirkt.

Der Haltebereich 34 des Befestigungsschenkels 30 ist von dem oberen horizontalen Abdeckblech 14 des Schaltschrankgehäuses 10 in einem Abstand a beabstandet, welcher im Wesentlichen der Höhe h des Randprofils 36 des Daches 19 entspricht.

Der Abstand a zwischen dem Haltebereich 34 des Befestigungsschenkels 30 und dem Abdeckblech 14 kann dabei geringfügig größer als die Höhe h des Randprofils 36 ausgelegt sein, damit das Randprofil 36 in den Abstandsbereich zwischen dem Haltebereich 34 des Befestigungsschenkels 30 und dem Abdeckblech 14 eingreifen kann und auch ein verkipptes Einführen des Randprofils 36 möglich ist.

Der Haltebereich 34 des Befestigungsschenkels 30 kann (in einer nicht gezeigten) alternativen Ausführungsform komplett über den Abdeckblech 14 hervorstehen. Dabei kann der Befestigungsbereich des Daches 19 im Bereich der Befestigungsschenkels 30 so freigeschnitten sein, dass der Montagevorgang durch eine Kippbewegung durchgeführt werden kann.

In einer weiteren (nicht gezeigten) Ausführungsform kann der Befestigungsschenkel 30 im Haltebereich 34 nach unten angewinkelt sein, so das die Montage nach wie bei der vorstehend beschriebenen Ausführungsform über einen Kippvorgang durchgeführt werden kann, wobei jedoch im montierten Zustand über eine Federwirkung das Dach 19 mit einem kleinen Gegendruck fest auf das Abdeckblech 14 des Gehäuses gesichert wird

Wie die Figur 2 im Zusammenhang mit der Figur 3 zeigt, stehen die im Bereich der Rückwand 46 des Schaltschrankes am oberen horizontalen Abdeckblech 14 angeordneten Winkelelemente 20a und 20b des ersten Typs mit einem Teil des Haltebereichs 34 des jeweiligen Befestigungsschenkels 30 über die Umfangsbegrenzung des oberen horizontalen Abdeckblechs 14 des Schaltschrankgehäuses 10 hervor. Die Auflage 42 des Randprofils 36 ist zwischen den Befestigungsschenkeln 30 der zwei Winkelelemente 20a und 20b und dem oberen horizontalen Abdeckblech 14 des Schaltschrankgehäuses 10 festgelegt.

Das Dach 19 lässt sich für die Montage in einer (nicht gezeigte) nach hinten verschobenen Position auf das obere horizontale Abdeckblech 14 des Schaltschrankgehäuses 10 aufsetzen, wobei eine Verkippung möglich ist, bei der das vordere, der Schaltschranktür zugewandte Teil des Daches 19 gegenüber dem hinteren, der Rückwand 46 zugewandten Teil angehoben ist. In dieser Position ist die Auflage 42 des Randprofils 36 des Daches 19 in von der Rückwand 46 senkrecht wegweisenden Richtung nach hinten verschonen angeordnet. Die Auflage 42 des Randprofils 36 steht dabei mit den Haltebereichen 34 der Befestigungsschenkel 30 der Winkelelemente 20a und 20b nicht in Eingriff. Wenn das Dach 19 in Richtung auf die Schaltschranktür 13 verschoben wird, kommt die Auflage 42 des Randprofils 36 mit den Haltebereichen 34 der Befestigungsschenkel 30 der Winkelelemente 20a und 20b in Eingriff.

Die Figur 4 zeigt in schematischer Darstellung und in teilweise geschnittener Seitenansicht ein in der Figur 2 dargestelltes Winkelelement 22a des zweiten Typs. Die in der Figur 2 gezeigten Winkelelemente 22a und 22b sind gleich ausgebildet. Nachfolgend wird anhand der Figur 4 nur das Winkelelemente 22a beschrieben. Von dem oberen horizontalen Abdeckblech 14 steht senkrecht ein Schenkel 29 hervor. Der Schenkel 29 ist mit einer senkrecht dazu angebrachten Durchgangsbohrung 27 zum Eingreifen eines Karabiners versehenen. Parallel zum oberen horizontalen Abdeckblech 14 erstreckt sich ein Befestigungsschenkel 31, der sich im rechten Winkel an den Schenkel 29 anschließt. Insoweit gleicht das Winkelelement 22a des zweiten Typs dem in der Figur 3 gezeigten Winkelelement 20a des ersten Typs.

Bei dem in der Figur 4 gezeigten Winkelelement 22a des zweiten Typs liegt im Gegensatz zu dem in der Figur 3 gezeigten Winkelelement 20a des ersten Typs der gesamte Befestigungsschenkel 31 an dem oberen horizontalen Abdeckblech 14 des Schaltschrankgehäuses 10 an und ist an diesem befestigt. Zu diesem Zweck ist bei der in der Figur 4 gezeigten Ausführungsform wiederum eine Nietverbindung 33 angedeutet. Alternativ könnte auch eine (nicht gezeigte) Schraub- oder Schweißverbindung vorgesehen sein.

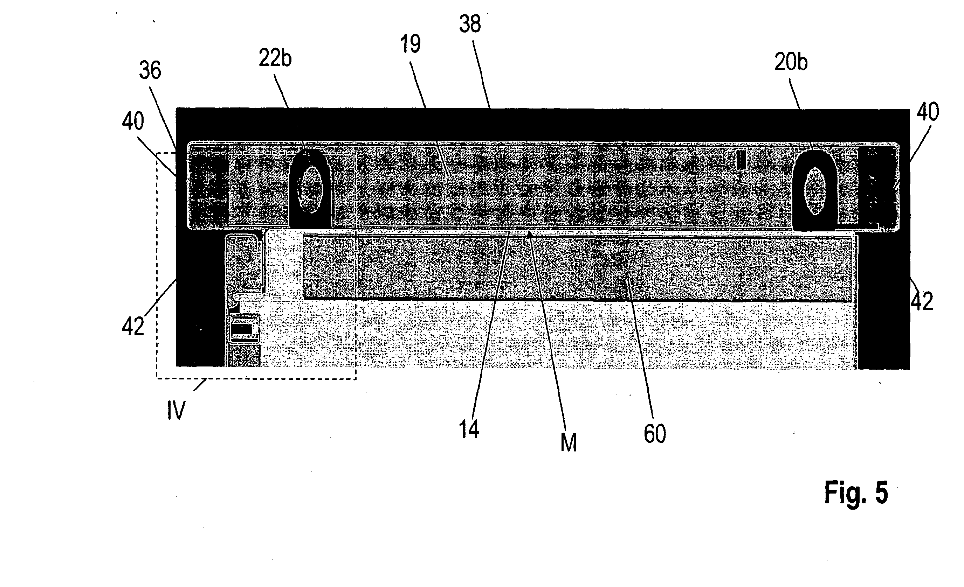

Die Figur 5 zeigt in schematischer Darstellung und geschnittener Seitenansicht den Dachbereich des in der Figur 2 dargestellten Schaltschrankes.

Das Dach 19 weist ein flächiges Dachblech 38 auf, welches umfangsmäßig über das obere horizontale Abdeckblech 14 des Schaltschrankgehäuses 10 mit einem Randprofil 36 hervorsteht, wie anhand der Figur 2 deutlich wird. Das Randprofil 36 weist eine umlaufende, sich senkrecht in Richtung auf das obere horizontale Abdeckblech 14 des Schaltschrankgehäuses 10 ausgerichtete Seitenabkantung 40 auf. Die Seitenabkantung 40 weist eine dazu senkrecht in Richtung auf die Mitte M des oberen horizontalen Abdeckblechs 14 des Schaltschrankgehäuses 10 und parallel dazu verlaufende Auflage 42 auf. Mit der Auflage 42 liegt das Dach 19 am Randbereich des oberen horizontale Abdeckblechs 14 des Schaltschrankgehäuses 10 auf.

Das obere horizontale Abdeckblech 14 liegt auf einem oberen Rahmengestell des Schaltschrankgehäuses 10 auf, von dem in der Darstellung der Figur 5 die obere Tiefenstrebe 60 gezeigt ist.

Wie die Figur 2 im Zusammenhang mit der Figur 3 zeigt, ist die Auflage 42 des Randprofils 36 zwischen den Befestigungsschenkeln 30 der zwei Winkelelemente 20a und 20b und dem oberen horizontalen Abdeckblech 14 des Schaltschrankgehäuses 10 festgelegt.

Die Auflage 42 weist mehrere Lüftungsschlitze 44 auf, die in Bereichen 45 angeordnet sind, die sich parallel zur Schaltschranktür 13, zur Rückwand 46 und zu den Seitenblechen 48 des Schaltschrankgehäuses 10 erstrecken. Die Lüftungsschlitze 44 erstrecken sich senkrecht zur Schaltschranktür 13, zur Rückwand 46 bzw. zu den Seitenblechen 48 des Schaltschrankgehäuses 10.

Die Schenkel 28 der Winkelelemente 20a, 20b und 22a, 22b sind im Wesentlichen in Richtung der beiden in die Figur 2 eingezeichneten Diagonalen D1 und D2 des oberes horizontalen Abdeckblechs 14 ausgerichtet.

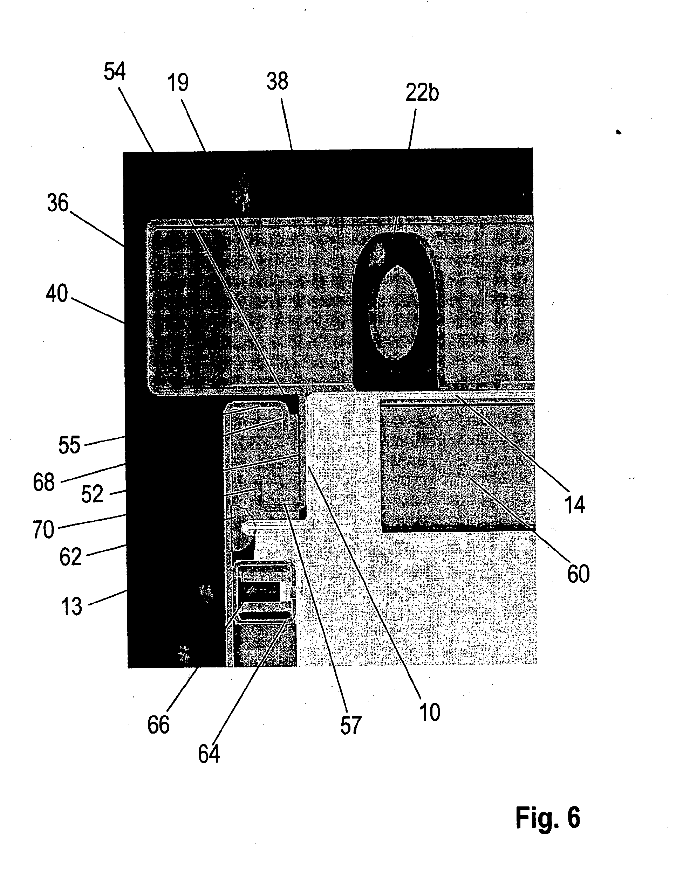

Die Figur 6 zeigt in schematischer Darstellung und geschnittener Seitenansicht den in der Figur 5 gekennzeichneten Teil IV in vergrößerter Darstellung.

An dem der Schaltschranktür 13 zugewandten Bereich des Randprofils 36 des Daches 19 ist ein sich senkrecht vom Dach 19 in Richtung auf den Bodenrahmen 50 des Schaltschranks erstreckender Verriegelungsansatz 52 angeformt, der sich in den Abstandsbereich 54 zwischen der Schaltschranktür 13 und dem Schaltschrankgehäuse 10 hineinerstreckt. Bei geschlossener Schaltschranktür 13 ist, wie die Figur 6 zeigt, ein Verschieben des Daches 19 parallel zum oberen horizontalen Abdeckblech 14 in Richtung der Schaltschranktür 13 verhindert ist.

Die Schaltschranktür schlägt in der in Figur 6 gezeigten geschlossenen Stellung an einer am Schaltschrankgehäuse 10 angebrachten, um die Türöffnung umlaufenen Dichtung 62 an. Die Schaltschranktür weist einen Türrohrrahmen 64 auf, an der das Türblech mittels eines daran angeschweißten Bolzens 66 befestigt ist.

Der dem oberen horizontalen Abdeckblech 14 des Schaltschrankgehäuses 10 zugeordnete Rand der Schaltschranktür 13 ist senkrecht in Richtung auf das Schaltschrankgehäuse 10 abgekantet, wodurch eine Abkantung 55 gebildet ist. An der Abkantung 55 ist wiederum ein sich dazu senkrecht in Richtung des Sockels 51 erstreckender abgekanteter Endbereich 68 angeformt. Der sich senkrecht vom Dach 19 in Richtung auf den Bodenrahmen des Schaltschranks erstreckender Verriegelungsansatz 52 ist an seinem unteren Ende senkrecht in Richtung auf die Schaltschranktür 13 abgekantet, wodurch eine Abkantung 57 gebildet ist. An der Abkantung 57 ist wiederum ein sich dazu senkrecht in Richtung des Daches 19 erstreckender abgekanteter Endbereich 70 angeformt.

Wie anhand der Figur 2 deutlich wird, steht die Auflage 42 des Randprofils 36 im Bereich zwischen den beiden Winkelelementen 20a und 20b mit einem vorstehenden Auflagebereich 56 in Richtung auf die Mitte M des oberen horizontalen Abdeckblechs 14 des Schaltschrankgehäuses 10 hervor und bildet eine verbreiterte Auflagefläche 47 des Daches 19 auf dem Randbereich des Abdeckblechs 14.

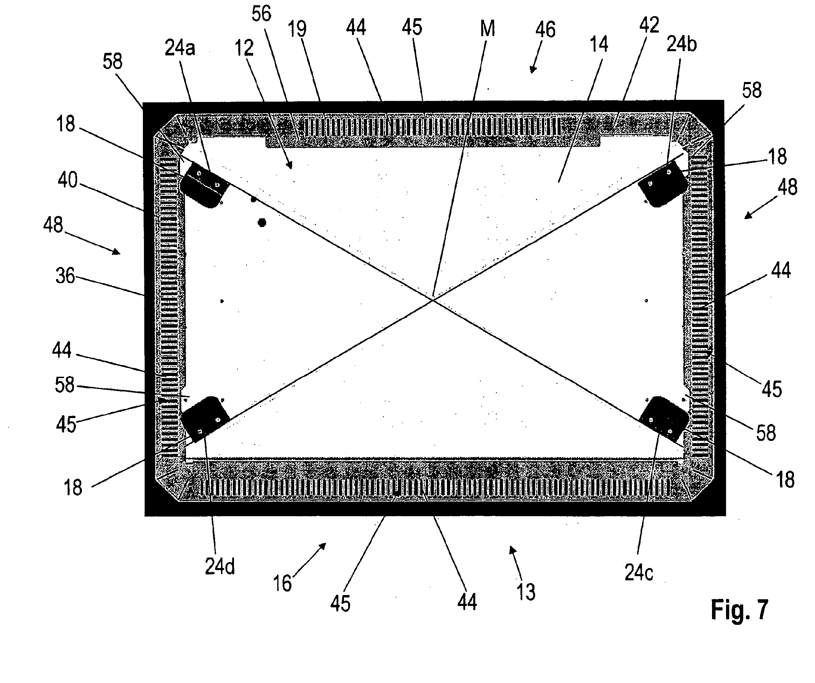

Figur 7 zeigt in schematischer Darstellung und in Draufsicht einen Schaltschrank gemäß einer zweiten bevorzugten Ausführungsform, bei der ein Dach 19 auf das obere horizontale Abdeckblech 14 des Schaltschrankgehäuses 10 aufgesetzt und durch Winkelelemente 24a, 24b, 24c und 24d gesichert ist. Das Dachblech ist auch in der Darstellung der Figur 7 ausgelassen, um den Blick auf das am Dach 19 angeformte Randprofil 36 und die Anordnung der vier Winkelelemente 24a, 24b, 24c und 24d des ersten Typs freizugeben.

Die Figur 7 zeigt Komponenten, welche bereits in der Figur 2 mit denselben Bezugszeichen versehen wurden und vorstehend im Zusammenhang mit der Figur 2 beschrieben worden sind. Diese Komponenten werden nachfolgend nicht nochmals beschrieben, denn sie haben dieselbe Funktionalität wie die in der Figur 2 dargestellten Komponenten mit denselben Bezugszeichen. Nachfolgend werden nur die Unterschiede zu der in Figur 2 dargestellten Ausführungsform beschrieben.

Zwei Winkelelemente 24a und 24b des anhand der Figur 3 bereits beschriebenen ersten Typs sind am oberen horizontalen Abdeckblech 14 im Bereich der Rückwand 46 in den zugeordneten Eckbereichen des Abdeckblechs 14 angeordnet. Zwei weitere Winkelelemente 24c und 24c desselben ersten Typs sind im Bereich der Schaltschranktür 13 in den zugeordneten Eckbereichen des Abdeckblechs 14 angeordnet.

Die Winkelelemente 24a, 24b, 24c und 24d weisen wie das anhand der Figur 3 beschriebene Winkelelement 20a Befestigungsschenkel 30 auf, die mit ihren Befestigungsbereichen 32 am oberen horizontalen Abdeckblech 14 des Schaltschrankgehäuses 10 anliegen und an diesem befestigt sind. Die Haltebereiche 34 sind vom oberen horizontalen Abdeckblech 14 des Schaltschrankgehäuses 10 beabstandet, wobei die Auflage 42 des Randprofils 36 zwischen den Befestigungsschenkeln 30 der Winkelelemente 24a, 24b, 24c und 24d und dem oberen horizontalen Abdeckblech 14 des Schaltschrankgehäuses 10 festgelegt sind.

Die Auflage 42 des Randprofils 36 weist vier Ausnehmungen 58 auf, die in Richtung der Rückwand 46 des Schaltschrankgehäuses 10 versetzt und benachbart zu den Winkelelementen 24a, 24b, 24c und 24d ausgeformt sind. Die Ausnehmungen 58 sind korrespondierend zu den Haltebereichen 34 der Befestigungsschenkel 30 der Winkelelemente 24a, 24b, 24c und 24d ausgebildet.

Für die Montage lässt sich das Dach 19 in einer (nicht gezeigten) Position auf das obere horizontale Abdeckblech 14 des Schaltschrankgehäuses 10 so aufsetzen, dass die Ausnehmungen 58 in der Auflage 42 des Randprofils 36 mit den Haltebereichen 34 der Befestigungsschenkel 30 der Winkelelemente 24a, 24b, 24c und 24d in Deckung sind. In dieser Position steht die Auflage 42 des Randprofils 36 mit den Haltebereichen 34 der Befestigungsschenkel 30 der Winkelelemente 24a, 24b, 24c und 24d außer Eingriff. Wenn das Dach 19 in Richtung auf die Rückwand 46 des Schaltschrankgehäuses 10 hin verschoben wird, lässt sich die Auflage 42 des Randprofils 36 mit den Haltebereichen 34 der Befestigungsschenkel 30 der Winkelelemente 24a, 24b, 24c und 24d in Eingriff bringen.

Der in der Figur 6 gezeigte, sich senkrecht vom Dach 19 in Richtung auf den Bodenrahmen 50 des Schaltschrankgehäuses 10 erstreckende Verriegelungsansatz 52 schlägt bei Verschiebung des Daches 19 in Richtung der Rückwand 46 des Schaltschrankgehäuses 10 am Schaltschrankgehäuse 10 an.

## Patentansprüche

1. Schaltschrank mit einem Schaltschrankgehäuse (10), welches an seiner Oberseite (12) durch ein oberes Abdeckblech (14) begrenzt wird und an seiner Vorderseite (16) mindestens eine Schaltschranktür (13) aufweist, wobei an der Oberseite (12) des Schaltschrankgehäuses (10) eine Mehrzahl von Transportösen (18) angebracht ist, welche durch ein lösbar befestigbares Dach (19) abdeckbar sind,
**dadurch gekennzeichnet,**
**dass** die Transportösen (18) durch Winkelelemente (20a, 20b, 22a, 22b; 24a, 24b, 24c, 24d) gebildet sind, die jeweils einen von dem oberen Abdeckblech (14) hervorstehenden, mit einer Durchgangsbohrung (26; 27) versehenen Schenkel (28; 29) und einen dazu im Winkel stehenden Befestigungsschenkel (30; 31) aufweist, wobei die Befestigungsschenkel (30; 31) mindestens eines Teils der Winkelelemente (20a, 20b; 24a, 24b, 24c, 24d) jeweils einen Befestigungsbereich (32), mit welchem sie an der Oberseite (12) des Schaltschrankgehäuses (10) angebracht sind, und einen Haltebereich (34) aufweisen, mit welchem sie ein an dem Dach (19) angeformtes Randprofil (36) hintergreifen.

2. Schaltschrank nach Anspruch 1,
**dadurch gekennzeichnet,**
**dass** der Haltebereich (34) gegenüber dem Randprofil (36) federelastisch vorgespannt ist, so dass im montierten Zustand des Daches ein Gegendruck auf das Randprofil (36) wirkt.

3. Schaltschrank nach Anspruch 1 oder 2,
**dadurch gekennzeichnet,**
**dass** mindestens ein Teil der Winkelelemente (22a, 22b) einen von dem oberen Abdeckblech (14) hervorstehenden, mit einer Durchgangsbohrung (27) versehenen Schenkel (29) und einen dazu im Winkel stehenden Befestigungsschenkel (31) aufweisen, wobei die Befestigungsschenkel (31) an dem oberen Abdeckblech (14) des Schaltschrankgehäuses (10) anliegen und an diesem befestigt sind.

4. Schaltschrank nach einem der Ansprüche 1 bis 3,
**dadurch gekennzeichnet,**
**dass** die Schenkel (28) der Winkelelemente (20a, 20b, 22a, 22b; 24a; 24b; 24c; 24d) im Wesentlichen in Richtung der Diagonalen (D1; D2) des oberes Abdeckblechs (14) ausgerichtet sind.

5. Schaltschrank nach einem der Ansprüche 1 bis 4,
**dadurch gekennzeichnet,**
**dass** das Dach (19) ein flächiges Dachblech (38) aufweist, welches umfangsmäßig über das obere Abdeckblech (14) des Schaltschrankgehäuses (10) mit einem Randprofil (36) hervorsteht, das eine umlaufende, sich in Richtung auf das obere Abdeckblech (14) des Schaltschrankgehäuses (10) ausgerichtete Seitenabkantung (40) aufweist, welche wiederum eine dazu in Richtung auf die Mitte (M) des oberen Abdeckblechs (14) des Schaltschrankgehäuses (10) abgekantete Auflage (42) aufweist, mit welcher das Dach (19) am Randbereich des oberen Abdeckblechs (14) des Schaltschrankgehäuses (10) aufliegt.

6. Schaltschrank nach Anspruch 5,
**dadurch gekennzeichnet,**
**dass** die Auflage (42) Lüftungsschlitze (44) aufweist, die in Bereichen (45) angeordnet sind, die sich zumindest teilweise parallel zur Schaltschranktür (13), zur Rückwand (46) und zu den Seitenblechen (48) des Schaltschrankgehäuses (10) erstrecken.

7. Schaltschrank nach Anspruch 6,
**dadurch gekennzeichnet,**
**dass** eine Mehrzahl von Lüftungsschlitzen (44) senkrecht zur Schaltschranktür (13), zur Rückwand (46) und zu den Seitenblechen (48) des Schaltschrankgehäuses (10) verlaufen.

8. Schaltschrank nach Anspruch 1,
**dadurch gekennzeichnet,**
**dass** die Auflage (42) des Randprofils (36) zwischen den Befestigungsschenkeln (30) mindestens zweier Winkelelemente (20a, 20b; 24a, 24b, 24c, 24d) und dem oberen Abdeckblech (14) des Schaltschrankgehäuses (10) festgelegt ist.

9. Schaltschrank nach einem der Ansprüche 1 bis 8,
**dadurch gekennzeichnet,**
**dass** zumindest zwei der Winkelelemente (20a, 20b) mit zumindest einem Teil der Haltebereiche (34) der Befestigungsschenkel (30) über die Umfangsbegrenzung des oberen Abdeckblechs (14) des Schaltschrankgehäuses (10) hervorstehen.

10. Schaltschrank nach einem der Ansprüche 5 to 9,
**dadurch gekennzeichnet,**
**dass** an dem der Schaltschranktür (13) zugewandten Bereich des Randprofils (36) des Daches (19) ein sich vom Dach (19) in Richtung auf den Bodenrahmen (50) des Schaltschranks erstreckender Verriegelungsansatz (52) angeformt ist, der sich in den Abstandsbereich (54) zwischen der Schaltschranktür (13) und dem Schaltschrankgehäuse (10) hineinerstreckt, so dass bei geschlossener Schaltschranktür (13) ein Verschieben des Daches (19) gegenüber dem oberen Abdeckblech (14) in Richtung der Schaltschranktür (13) verhindert ist.

11. Schaltschrank nach Anspruch 10,
**dadurch gekennzeichnet,**
**dass** der dem oberen Abdeckblech (14) des Schaltschrankgehäuses (10) zugeordnete Rand der Schaltschranktür (13) in Richtung auf das Schaltschrankgehäuse (10) abgekantet (Abkantung 55) ist und der sich vom Dach (19) in Richtung auf den Bodenrahmen des Schaltschranks erstreckender Verriegelungsansatz (52) an seinem unteren Ende in Richtung auf die Schaltschranktür (13) abgekantet (Abkantung 57) ist.

12. Schaltschrank nach einem der Ansprüche 5 bis 11,
**dadurch gekennzeichnet,**
**dass** der Befestigungsbereich (32) des Befestigungsschenkels (30) des Winkelelements (20a, 20b; 24a, 24b, 24c, 24d) an dem oberen Abdeckblech (14) des Schaltschrankgehäuses (10) anliegt und an diesem befestigt ist, wobei der Haltebereich (34) des Befestigungsschenkels (30) von dem oberen Abdeckblech (14) des Schaltschrankgehäuses (10) in einem Abstand (a) beabstandet ist, welcher im Wesentlichen der Höhe (h) der Auflage (42) des Randprofils (36) des Daches (19) entspricht.

13. Schaltschrank nach einem der Ansprüche 5 bis 12,
**dadurch gekennzeichnet,**
**dass** mindestens zwei erste Winkelelemente (20a, 20b) mit Befestigungsschenkeln (30), die mit ihren Befestigungsbereichen (32) am oberen Abdeckblech (14) des Schaltschrankgehäuses (10) anliegen und an diesem befestigt sind, und die mit ihren Haltebereichen (34) vom oberen Abdeckblech (14) des Schaltschrankgehäuses (10) beabstandet sind, am oberen Abdeckblech (14) im Bereich der von der Schaltschranktür (13) abgewandten Rückwand (46) angeordnet sind, wobei die Haltebereiche (34) über die Umfangsbegrenzung des oberen Abdeckblechs (14) hervorstehen und die Auflage (42) des Randprofils (36) zwischen den Befestigungsschenkeln (30) der zwei ersten Winkelelemente (20a, 20b) und dem oberen Abdeckblech (14) des Schaltschrankgehäuses (10) festlegbar ist, und
mindestens zwei zweite Winkelelemente (22a; 22b) mit Befestigungsschenkeln (31), die am oberen Abdeckblech (14) des Schaltschrankgehäuses (10) anliegen, am oberen Abdeckblech (14) im Bereich der Schaltschranktür (13) des Schaltschrankgehäuses (10) angeordnet und befestigt sind.

14. Schaltschrank nach Anspruch 13,
**dadurch gekennzeichnet,**
**dass** die Auflage (42) des Randprofils (36) im Bereich zwischen den beiden ersten Winkelelementen (20a; 20b) mit einem vorstehenden Auflagebereich (56) in Richtung auf die Mitte des oberen Abdeckblechs (14) des Schaltschrankgehäuses (10) hervorsteht und eine verbreiterte Auflagefläche (47) bildet.

15. Schaltschrank nach Anspruch 13 oder 14,
**dadurch gekennzeichnet,**
**dass** das Dach (19) für die Montage derart auf das obere Abdeckblech (14) des Schaltschrankgehäuses (10) aufsetzbar ist, dass die im Bereich der von der Schaltschranktür (13) abgewandten Rückwand (46) angeordnete Auflage (42) des Randprofils (36) des Daches (19) in von der Rückwand (46) wegweisenden Richtung angeordnet ist, wobei die Auflage (42) des Randprofils (36) außer Eingriff mit den Haltebereichen (34) der Befestigungsschenkel (30) der ersten Winkelelemente (20a; 20b) stehen, und wobei das Dach (19) in Richtung auf die Schaltschranktür (13) hin verschiebbar ist, so dass die Auflage (42) des Randprofils (36) mit den Haltebereichen (34) der Befestigungsschenkel (30) der ersten Winkelelemente (20a; 20b) in Eingriff bringbar ist.

16. Schaltschrank nach einem der Ansprüche 5 bis 12,
**dadurch gekennzeichnet,**
**dass** mindestens zwei Winkelelemente (24a, 24b) am oberen Abdeckblech (14) im Bereich der von der Schaltschranktür (13) abgewandten Rückwand (46) und mindestens zwei weitere Winkelelemente (24c, 24c) im Bereich der Schaltschranktür (13) des Schaltschrankgehäuses (10) angeordnet sind, wobei die Winkelelemente (24a, 24b, 24c, 24d) Befestigungsschenkel (30) aufweisen, die mit ihren Befestigungsbereichen (32) am oberen Abdeckblech (14) des Schaltschrankgehäuses (10) anliegen und an diesem befestigt sind, und die mit ihren Haltebereichen (34) vom oberen Abdeckblech (14) des Schaltschrankgehäuses (10) beabstandet sind, wobei die Auflage (42) des Randprofils (36) zwischen den Befestigungsschenkeln (30) der Winkelelemente (24a, 24b, 24c, 24d) und dem oberen Abdeckblech (14) des Schaltschrankgehäuses (10) festlegbar ist.

17. Schaltschrank nach Anspruch 16,
**dadurch gekennzeichnet,**
**dass** die Auflage (42) des Randprofils (36) Ausnehmungen (58) aufweist, die in Richtung der Rückwand (46) des Schaltschrankgehäuses (10) benachbart zu den Winkelelementen (24a, 24b, 24c, 24d) und korrespondierend zu den Haltebereichen (34) der Befestigungsschenkel (30) der Winkelelemente (24a, 24b, 24c, 24d) ausgeformt sind.

18. Schaltschrank nach Anspruch 16 oder 17,
**dadurch gekennzeichnet,**
**dass** das Dach (19) für die Montage derart auf das obere Abdeckblech (14) des Schaltschrankgehäuses (10) aufsetzbar ist, dass die Ausnehmungen (58) in der Auflage (42) des Randprofils (36) mit den Haltebereichen (34) der Befestigungsschenkel (30) der Winkelelemente (24a, 24b, 24c, 24d) in Deckung sind, wobei
die Auflage (42) des Randprofils (36) außer Eingriff mit den Haltebereichen (34) der Befestigungsschenkel (30) der Winkelelemente stehen, und wobei das Dach (19) in Richtung auf die Rückwand (46) des Schaltschrankgehäuses (10) hin verschiebbar ist, so dass die Auflage (42) des Randprofils (36) mit den Haltebereichen (34) der Befestigungsschenkel (30) der Winkelelemente (24a, 24b, 24c, 24d) in Eingriff bringbar ist.

19. Schaltschrank nach Anspruch 18,
**dadurch gekennzeichnet,**
**dass** der sich vom Dach (19) in Richtung auf den Bodenrahmen (50) Schaltschrankgehäuses (10) erstreckende Verriegelungsansatz (52) bei Verschiebung des Daches (19) in Richtung der Rückwand (46) des Schaltschrankgehäuses (10) am Schaltschrankgehäuse (10) anschlägt.

## Claims

1. An electric cabinet with an electric cabinet housing (10) delimited at a top (12) by an upper cover plate (14) and having at least one electric cabinet door (13) on a front surface with a plurality of transport eyes (18) attached to the top (12) of the electric cabinet housing (10) and that is coverable by a detachably fastenable roof (19), **characterized in that**
the transport eyes (18) are formed by angle elements (20a, 20b, 22a, 22b; 24a, 24b, 24c, 24d) each having one leg (28; 29) protruding from the upper cover plate (14) and provided with a through bore (26; 27), and one fastening leg (30; 31) oriented at an angle thereto, the fastening legs (30; 31) of at least a portion of the angle elements (20a, 20b; 24a, 24b, 24c, 24d) each having a fastening region (32) attached to the top (12) of the electric cabinet housing (10) and a holding region (34) engaging behind an edge profile (36) formed onto the mounted roof (19).

2. The electric cabinet of claim 1, **characterized in that** the holding region (34) is prestressed in a spring-elastic fashion in relation to the edge profile (36) so that when the roof is in a mounted state a counterpressure acts on the edge profile (36).

3. The electric cabinet of claim 2, **characterized in that** at least a portion of the angle elements (22a, 22b) each has the one leg (29), which protrudes from the upper cover plate (14) and has a through bore (27), and one fastening leg (31) oriented at an angle thereto, and the fastening legs (31) rest against and are fastened to the upper cover plate (14) of the electric cabinet housing (10).

4. The electric cabinet of any of claims 1 to 3, **characterized in that** the legs (28) of the angle elements (20a, 20b, 22a, 22b; 24a; 24b; 24c; 24d) are oriented in a direction of the diagonals (D1; D2) of the upper cover plate (14).

5. The electric cabinet of claim 4, **characterized in that** the roof (19) has a flat roof plate (38) which protrudes beyond the circumference edges of the upper cover plate (14) of the electric cabinet housing (10) with an edge profile (36) having a lateral bent section (40) extending continuously around and oriented toward the upper cover plate (14) and in turn having an angled support (42) oriented toward a middle (M) of the upper cover plate (14) of the electric cabinet housing (10), with which the roof (19) rests on an edge region of the upper cover plate (14) of the electric cabinet housing (10).

6. The electric cabinet of claim 5, **characterized in that** the support (42) has ventilation slots (44) positioned in regions (45) that at least in some sections, extend parallel to the electric cabinet door (13), the back wall (46), and the side plates (48) of the electric cabinet housing (10).

7. The electric cabinet of claim 6, **characterized in that** a plurality of ventilation slots (44) extend perpendicular to the electric cabinet door (13), the back wall (46), and the side plates (48) of the electric cabinet housing (10).

8. The electric cabinet of claim 1, **characterized in that** the support (42) of the edge profile (36) is affixed between the fastening legs (30) of at least two angle elements (20a, 20b; 24a, 24b, 24c, 24d) and the upper cover plate (14) of the electric cabinet housing (10).

9. The electric cabinet of any of claims 1 to 8, **characterized in that** at least two of the angle elements (20a, 20b) protrude beyond a circumference boundary of the upper cover plate (14) of the electric cabinet housing (10) with at least a part of the holding regions (34) of the fastening legs (30).

10. The electric cabinet of any of claims 5 to 9, **characterized in that** a locking projection (52) which extends from the roof (19) toward a bottom frame (50) of the electric cabinet is formed onto a region of the edge profile (36) of the roof (19) oriented toward the electric cabinet door (13) and extends into the intermediate region (54) between the electric cabinet door (13) and the electric cabinet housing (10) so that when the electric cabinet door (13) is closed, the roof (19) is prevented from sliding toward the electric cabinet door (13) relative to the upper cover plate (14).

11. The electric cabinet of claim 10, **characterized in that** the edge of the electric cabinet door (13) oriented toward the upper cover plate (14) of the electric cabinet housing (10) is bent toward the electric cabinet housing (10) (bent 55) and a lower end of the locking projection (52) which extends perpendicularly from the roof (19) toward the bottom frame of the electric cabinet is bent toward the electric cabinet door (13) (bent 57).

12. The electric cabinet of any one of claims 5 to 11, **characterized in that** the fastening region (32) of the fastening leg (30) of the angle element (20a, 20b; 24a, 24b, 24c, 24d) rests against and is fastened to the upper cover plate (14) of the electric cabinet housing (10), the holding region (34) of the fastening leg (30) is spaced apart from the upper cover plate (14) of the electric cabinet housing (10) by a distance (a) corresponding to a height (h) of the support (42) of the edge profile (36) of the roof (19).

13. The electric cabinet of any of claims 5 to 12, **characterized in that** at least two first angle elements (20a, 20b) with fastening legs (30) having fastening regions (32) rest against and are fastened to the upper cover plate (14) of the electric cabinet housing (10) and having the holding regions (34) spaced apart from the upper cover plate (14) of the electric cabinet housing (10) are situated on the upper cover plate (14) in the region of the back wall (46) remote from the electric cabinet door (13), the holding regions (34) protruding beyond the circumferential boundary of the upper cover plate (14) and the support (42) of the edge profile (36) can be affixed between the fastening legs (30) of the two first angle elements (20a, 20b) and the upper cover plate (14) of the electric cabinet housing (10) and at least two second angle elements (22a; 22b) with fastening legs (31) which rest against the upper cover plate (14) of the electric cabinet housing (10) are situated on and fastened to the upper cover plate (14) near the electric cabinet door (13) of the electric cabinet housing (10).

14. The electric cabinet of claim 13, **characterized in that** between the two first angle elements (20a; 20b), the support (42) of the edge profile (36) protrudes with a projecting support region (56) in the direction toward the middle of the upper cover plate (14) of the electric cabinet housing (10) and forms a broadened support surface (47).

15. The electric cabinet of claim 13 or 14, **characterized in that** for installation, the roof (19) is positionable onto the upper cover plate (14) of the electric cabinet housing (10) so that the support (42) of the edge profile (36) of the roof (19) situated in the region of the back wall (46) remote from the electric cabinet door (13) is arranged in the direction pointing out from the back wall (46) and the support (42) of the edge profile (36) does not engage with the holding regions (34) of the fastening legs (30) of the first angle elements (20a; 20b), and the roof (19) is slidable toward the electric cabinet door (13) so that the support (42) of the edge profile (36) engages with the holding regions (34) of the fastening legs (30) of the first angle elements (20a; 20b).

16. The electric cabinet of any of claims 5 to 12, **characterized in that** at least two angle elements (24a, 24b) are situated on the upper cover plate (14) near the back wall (46) remote from the electric cabinet door (13) while at least two other angle elements (24c, 24c) are situated near the electric cabinet door (13) of the electric cabinet housing (10), the angle elements (24a, 24b, 24c, 24d) have fastening legs (30) whose fastening regions (32) rest against and are fastened to the upper cover plate (14) of the electric cabinet housing (10) and whose holding regions (34) are spaced apart from the upper cover plate (14) of the electric cabinet housing (10), and the support (42) of the edge profile (36) is affixable between the fastening legs (30) of the angle elements (24a, 24b, 24c, 24d) and the upper cover plate (14) of the electric cabinet housing (10).

17. The electric cabinet of claim 16, **characterized in that** the support (42) of the edge profile (36) has recesses (58) formed adjacent to the angle elements (24a, 24b, 24c, 24d) and offset toward the back wall (46) of the electric cabinet housing (10) and are formed to correspond to the holding regions (34) of the fastening legs (30) of the angle elements (24a, 24b, 24c, 24d).

18. The electric cabinet of claim 16 or 17, **characterized in that** for installation, the roof (19) is positionable onto the upper cover plate (14) of the electric cabinet housing (10) so that the recesses (58) in the support (42) of the edge profile (36) are flush with the holding regions (34) of the fastening legs (30) of the angle elements (24a, 24b, 24c, 24d) and the support (42) of the edge profile (36) does not engage with the holding regions (34) of the fastening legs (30) of the angle elements, and the roof (19) is slidable toward the back wall (46) of the electric cabinet housing (10) so that the support (42) of the edge profile (36) can engage with the holding regions (34) of the fastening legs (30) of the angle elements (24a, 24b, 24c, 24d).

19. The electric cabinet of claim 18, **characterized in that** the locking projection (52) which extends perpendicularly from the roof (19) toward the bottom frame (50) of the electric cabinet housing (10), strikes against the electric cabinet housing (10) when the roof (19) is slid toward the back wall (46) of the electric cabinet housing (10).

## Revendications

1. Armoire électrique, comportant un caisson d'armoire (10) qui est délimité sur sa face supérieure (12) par une plaque de recouvrement supérieure (14) et comporte au moins une porte (13) sur sa face avant (16), une pluralité de boucles de transport (18) étant disposées sur la face supérieure (12) dudit caisson d'armoire (10), lesquelles peuvent être masquées par une paroi supérieure (19) pouvant être fixée de manière amovible,
**caractérisée en ce que** les boucles de transport (18) sont formées par des cornières (20a, 20b, 22a, 22b ; 24a, 24b, 24c, 24d) qui comportent chacune une branche (28 ; 29), en saillie sur la plaque de recouvrement supérieure (14) et munie d'une forure débouchante (26 ; 27), et une branche de fixation (30 ; 31) disposée en angle par rapport à ladite branche saillante, lesdites branches de fixation (30 ; 31) d'au moins une partie des cornières (20a, 20b ; 24a, 24b, 24c, 24d) comportant chacune une zone de fixation (32), par laquelle elles sont attachées à la face supérieure (12) du caisson d'armoire (10), et une zone de retenue (34) par laquelle elles s'engagent derrière un profilé de bordure (36) formé sur la paroi supérieure (19).

2. Armoire électrique selon la revendication 1, **caractérisée en ce que** la zone de retenue (34) est précontrainte de manière élastique par rapport au profilé de bordure (36), de telle sorte que, dans la position montée de la paroi supérieure, une contrepression s'exerce sur le profilé de bordure (36).

3. Armoire électrique selon la revendication 1 ou 2, **caractérisée en ce qu'**au moins une partie des cornières (22a, 22b) comportent une branche (29), en saillie sur la plaque de recouvrement supérieure (14) et munie d'une forure débouchante (27), et une branche de fixation (31) disposée en angle par rapport à ladite branche saillante, lesdites branches de fixation (31) étant en appui contre la plaque de recouvrement supérieure (14) du caisson d'armoire (10) et étant fixées à celle-ci.

4. Armoire électrique selon l'une quelconque des revendications 1 à 3, **caractérisée en ce que** les branches (28) des cornières (20a, 20b, 22a, 22b ; 24a, 24b, 24c, 24d) sont dirigées sensiblement dans la direction des diagonales (D1 ; D2) de la plaque de recouvrement supérieure (14).

5. Armoire électrique selon l'une quelconque des revendications 1 à 4, **caractérisée en ce que** la paroi supérieure (19) comporte une plaque (38) plane, dont le pourtour s'avance en saillie au-delà de la plaque de recouvrement supérieure (14) du caisson d'armoire (10) avec un profilé de bordure (36) qui comporte un biseau latéral (40), qui est dirigé vers la plaque de recouvrement supérieure (14) du caisson d'armoire (10) et qui, pour sa part, comporte une surface d'appui (42), qui est biseautée par rapport audit biseau latéral vers le milieu (M) de la plaque de recouvrement supérieure (14) du caisson d'armoire (10) et par laquelle la paroi supérieure (19) est en appui sur la zone de bordure de la plaque de recouvrement supérieure (14) du caisson d'armoire (10).

6. Armoire électrique selon la revendication 5, **caractérisée en ce que** ladite surface d'appui (42) comporte des fentes d'aération (44) qui sont agencées dans des zones (45) qui s'étendent au moins en partie parallèlement à la porte (13), à la paroi arrière (46) et aux plaques latérales (48) du caisson d'armoire (10).

7. Armoire électrique selon la revendication 6, **caractérisée en ce qu'**une pluralité de fentes d'aération (44) s'étendent perpendiculairement à la porte (13), à la paroi arrière (46) et aux plaques latérales (48) du caisson d'armoire (10).

8. Armoire électrique selon la revendication 1, **caractérisée en ce que** la surface d'appui (42) du profilé de bordure (36) est fixée entre les branches de fixation (30) d'au moins deux cornières (20a, 20b ; 24a, 24b, 24c, 24d) et la plaque de recouvrement supérieure (14) du caisson d'armoire (10).

9. Armoire électrique selon l'une quelconque des revendications 1 à 8, **caractérisée en ce qu'**au moins deux des cornières (20a, 20b) s'avancent avec au moins une partie des zones de retenue (34) des branches de fixation (30) au-delà de la limite périphérique de la plaque de recouvrement supérieure (14) du caisson d'armoire (10).

10. Armoire électrique selon l'une quelconque des revendications 5 à 9, **caractérisée en ce qu'**au niveau de la zone, orientée vers la porte (13), du profilé de bordure (36) de la paroi supérieure (19) est formée une saillie de verrouillage (52) qui s'étend à partir de la paroi supérieure (19) vers le cadre de fond (50) de ladite armoire électrique et qui s'étend vers l'intérieur de la zone d'écartement (54) entre la porte (13) et le caisson d'armoire (10), de manière à empêcher, lorsque la porte (13) est fermée, un déplacement de la paroi supérieure (19) par rapport à la plaque de recouvrement supérieure (14) vers la porte (13).

11. Armoire électrique selon la revendication 10, **caractérisée en ce que** le bord de la porte (13), orienté vers la plaque de recouvrement supérieure (14) du caisson d'armoire (10), est biseauté (biseau 55) vers le caisson d'armoire (10), et la saillie de verrouillage (52), qui s'étend à partir de la paroi supérieure (19) vers le cadre de fond de ladite armoire électrique, est biseautée (biseau 57) au niveau de son extrémité inférieure vers la porte (13).

12. Armoire électrique selon l'une quelconque des revendications 5 à 11, **caractérisée en ce que** la zone de fixation (32) de la branche de fixation (30) de la cornière (20a, 20b ; 24a, 24b, 24c, 24d) est en appui sur la plaque de recouvrement supérieure (14) du caisson d'armoire (10) et est fixée à celle-ci, la zone de retenue (34) de la branche de fixation (30) étant écartée de la plaque de recouvrement supérieure (14) du caisson d'armoire (10) selon une distance (a) qui correspond sensiblement à la hauteur (h) de la surface d'appui (42) du profilé de bordure (36) de la paroi supérieure (19).

13. Armoire électrique selon l'une quelconque des revendications 5 à 12, **caractérisée en ce qu'**au moins deux premières cornières (20a, 20b) avec des branches de fixation (30), qui sont en appui avec leurs zones de fixation (32) sur la plaque de recouvrement supérieure (14) du caisson d'armoire (10) et sont fixées contre celle-ci et qui avec leurs zones de retenue (34) sont écartées de la plaque de recouvrement supérieure (14) du caisson d'armoire (10), sont disposées sur la plaque de recouvrement supérieure (14) dans la zone de la paroi arrière (46) détournée de la porte (13), lesdites zones de retenue (34) s'avançant au-delà de la limite périphérique de la plaque de recouvrement supérieure (14), et la surface d'appui (42) du profilé de bordure (36) pouvant être immobilisée entre les branches de fixation (30) des deux premières cornières (20a, 20b) et la plaque de recouvrement supérieure (14) du caisson d'armoire (10), et au moins deux deuxièmes cornières (22a, 22b) avec les branches de fixation (31), qui sont en appui sur la plaque de recouvrement supérieure (14) du caisson d'armoire (10), sont disposées et fixées contre la plaque de recouvrement supérieure (14) dans la zone de la porte (13) du caisson d'armoire (10).

14. Armoire électrique selon la revendication 13, **caractérisée en ce que** la surface d'appui (42) du profilé de bordure (36), dans la zone entre les deux premières cornières (20a, 20b), s'avance en saillie avec une zone d'appui (56) saillante vers le milieu de la plaque de recouvrement supérieure (14) du caisson d'armoire (10) et forme une surface d'appui (47) élargie.

15. Armoire électrique selon la revendication 13 ou 14, **caractérisée en ce que** la paroi supérieure (19) peut être posée, en vue du montage, sur la plaque de recouvrement supérieure (14) du caisson d'armoire (10), de telle sorte que la surface d'appui (42), agencée dans la zone de la paroi arrière (46) détournée de la porte (13), du profilé de bordure (36) de la paroi supérieure (19) est agencée dans une direction orientée en s'écartant de la paroi arrière (46), ladite surface d'appui (42) du profilé de bordure (36) étant hors de prise avec les zones de retenue (34) des branches de fixation (30) des premières cornières (20a, 20b), et ladite paroi supérieure (19) pouvant être coulissée vers la porte (13), de telle sorte que la surface d'appui (42) du profilé de bordure (36) peut être amenée en prise avec les zones de retenue (34) des branches de fixation (30) des premières cornières (20a, 20b).

16. Armoire électrique selon l'une quelconque des revendications 5 à 12, **caractérisée en ce qu'**au moins deux cornières (24a, 24b) sont disposées au niveau de la plaque de recouvrement supérieure (14) dans la zone de la paroi arrière (46) détournée de la porte (13), et au moins deux autre cornières (24c, 24d) sont disposées dans la zone de la porte (13) du caisson d'armoire (10), lesdits cornières (24a, 24b, 24c, 24d) comportant des branches de fixation (30) qui, avec leurs zones de fixation (32), sont en appui sur la plaque de recouvrement supérieure (14) du caisson d'armoire (10) et sont fixées à celle-ci, et qui, avec leurs zones de retenue (34), sont écartées de la plaque de recouvrement supérieure (14) du caisson d'armoire (10), la surface d'appui (42) du profilé de bordure (36) pouvant être immobilisée entre les branches de fixation (30) des cornières (24a, 24b, 24c, 24d) et la plaque de recouvrement supérieure (14) du caisson d'armoire (10).

17. Armoire électrique selon la revendication 16, **caractérisée en ce que** la surface d'appui (42) du profilé de bordure (36) comporte des évidements (58), qui sont ménagés dans la direction de la paroi arrière (46) du caisson d'armoire (10) à proximité des cornières (24a, 24b, 24c, 24d) et en correspondance avec les zones de retenue (34) des branches de fixation (30) des cornières (24a, 24b, 24c, 24d).

18. Armoire électrique selon la revendication 16 ou 17, **caractérisée en ce que** la paroi supérieure (19) peut être posée, en vue du montage, sur la plaque de recouvrement supérieure (14) du caisson d'armoire (10) de telle sorte que les évidements (58) dans la surface d'appui (42) du profilé de bordure (36) coïncident avec les zones de retenue (34) des branches de fixation (30) des cornières (24a, 24b, 24c, 24d), ladite surface d'appui (42) du profilé de bordure (36) étant hors de prise des zones de retenue (34) des branches de fixation (30) des cornières, et la paroi supérieure (19) pouvant être coulissée vers la paroi arrière (46) du caisson d'armoire (10), de telle sorte que la surface d'appui (42) du profilé de bordure (36) peut être amenée en prise avec les zones de retenue (34) des branches de fixation (30) des cornières (24a, 24b, 24c, 24d).

19. Armoire électrique selon la revendication 18, **caractérisée en ce que** la saillie de verrouillage (52), qui s'étend à partir de la paroi supérieure (19) vers le cadre de fond (50) du caisson d'armoire (10), vient buter contre le caisson d'armoire (10) lors du coulissement de la paroi supérieure (19) vers la paroi arrière (46) du caisson d'armoire (10).
